# EUROPEAN PATENT APPLICATION

(11) **EP 2 725 756 A1**
(43) Date of publication of application: **30.04.2014**
(21) Application number: 12189839.9
(22) Date of filing: 24.10.2012
(51) Int. Cl.: H04L 29/06

(54) **Security-device and secure data transmission method**

(71) Applicant: OpenLimit SignCubes AG, 6341 Baar (CH)
(72) Inventor: Lunkeit, Armin, 10249 Berlin (DE)
(74) Representative: Gross, Felix

(57) **Abstract**

The invention relates to a security-device (10) for enabling a secure data transmission between a client-device (20) and a server system (30) over an inherently insecure data connection and / or with an inherently insecure client-device (20), comprising
a receiving means (2) for receiving a second authentication request (105) from the server system (30) regarding a data transmission request (101) from the client-device (20) to the server system (30),
the receiving-means (2) being coupled with an output means (3) for providing information about the data transmission request (101) to a user,
an input means (4) for the inputting of authentication data (110) by the user,
a means for generating a third authentication request (106) for the server system (30) by the user at the security-device (10) in dependence of the authentication data (110), and a first connection-means (1) configured so that only predefined enable signal (103) is receivable and / or processable by the security-device (10) and that the third authentication request (106) is only transmittable to the server system (30), after the correct receipt of the enable signal (103). The invention also relates to a method for a secure data transmission.

## Description

The invention relates to security-device according to claim 1 and a secure data transmission method according to claim 7.

It is a common task that client-devices, such as e.g. personal computers or tablet computers with an Internet browser request data from a server system. The usual connection via the Internet is inherently insecure since unauthorized persons can modify the data transmission or tamper with the security of the client-devices.

Online banking or online shopping are such typical transactions (i.e. in the form of a data transmissions) that requires some sort of authentication by the user of or at the client-device. But the user of the client-device can never be sure that the security of the client-device has not been compromised, e.g. through the infection by a Trojan. Even though the correct authentication might be given at the client-device (e.g. a password, a passphrase, a PIN or a TAN), the data actually sent to the server system or received by the server system might be altered by some unauthorized means, e.g. some unauthorized software on the client-device.

Therefore, it is desirable to develop devices and methods for safe data transmissions even under uncertain safety conditions of a client-device and / or communication channels.

To enable a secure data transmission between a client-device and a server system with an inherently insecure data connection and / or with an inherently insecure client-device a security-device comprises a receiving means for receiving a second authentication request from the server system regarding a data transmission request from the client-device to the server system,
the receiving-means being coupled with an output means for providing information about the data transmission request to a user,
an input means for the inputting of authentication data by the user,
a means for generating a third authentication request for the server system by the user at the security-device in dependence of the authentication data,
and a first connection-means configured so that only predefined enable signal is receivable and / or processable by the security-device and that the third authentication request is only transmittable to the server system, after the correct receipt of the enable signal. The predefined enable signal is to be considered an unambiguous signal.

For the authentication of the user at the security-device the user can provide authentication data at the security device comprising alphanumeric data, in particular a PIN code, a secret password or passphrase only known to the user and / or biometric data, in particular a fingerprint scan and / or an iris scan. With this information the server system can be sure, that the data from the transmission request it correct and authorized by the user.

The output means comprises an alphanumeric display and or /a Braille display so that complex information can be provided for the user.

The secure validation input means comprises an alphanumeric keyboard, a fingerprint scanner and / or an iris scanner. With these means the user can provide a secure input for the security-device

The security-device can e.g. be used for a first data transmission request for a money transfer or an online purchase.

The security-device can comprise first connection means connectable with a personal computer, a tablet device and /or a smartphone.

Also a method with the following steps assures a secure data transmission, wherein,
a) a data transmission request sent from a client-device to a server system;
b) the server system sends an acknowledge request to the client-device upon receipt of the data transmission request;
c) the client-device generating a predefined enable signal to a security-device;
d) the security-device sends first authentication request to the server system,
e) upon which the server system replies with a second authentication request comprising information regarding the data transmission request which is displayed by an output mean;
f) an input means receives authentication data (110) from a user;
g) a third authentication request is sent from the security-device to the server system, the content depending on the authentication data.

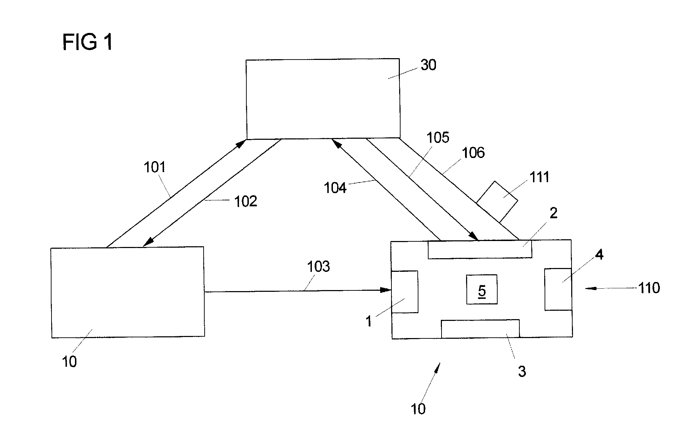

Exemplary embodiments are described in connection with the following figure in which
Fig. 1 shows the overview of an embodiment of a security-device enabling a secure data.

The data transmission, i.e. the data transmission (transaction) shown in Fig. 1 involves an embodiment of a security-device 10 that provides a secure communication channel between a server system 30 and the security-device 10. This enables - as will be discussed below - the authentication of a data transmission between a client-device 20 and the server system 30.

In an exemplary situation a user wants to initiate and complete a data transmission request (transaction request) from his/her client-device 20 to a server 30.

The client-device 20 can e.g. be a personal computer, a tablet device or a smartphone.

The requested data transmission can e.g. be an online banking session, a purchase at an Internet store or a personal registration at some service provider. The embodiments can operate with transmissions requiring that an authorized user initiates and / or authorizes the data transmission with the correct content (e.g. a correct amount of money or the correct account information). The term correct in this context implies that the correct content is the same as the content intended by the user.

In all these cases, sensitive information needs to be transmitted between the client-device 20 and the server system 30. Since the user cannot be sure that the security of the client-device 20 has not been compromised, he/she has to assume that the client-device 20 is inherently unsafe. The server system 30 cannot be sure that the request from the client-device 20 it authentic.

There is also an inherent insecurity in the data transmissions from the client-device 20 to the server system 30 that is beyond the control of the user. Therefore, this data transmission has to be considered as inherently unsafe as well.

As will be shown below, the security-device 10 opens a second, independent and inherently safe communication channel to the server system 30 that then enables the verification of the communication between the client-device 20 and the server system 30. This legitimizes the electronic data transmission between the client-device 20 and the server system 30.

In case of the online banking example a user of the client-device 20 initiates the data transmission, i.e. a transaction on a browser running on the client-device 20. Alternatively a different program, e.g. a specialized banking program can be used. Other possible applications are e.g. a login to web-site of a company, a login to a service portal for external workers such as service technicians or the use of the device as an access-device to a physical location rather than a computer. It is important that the client, be it through a browser or otherwise, can communicate with the Internet and receives Data from the server-system 30

In the embodiment described above, after invoking the banking platform, the user logs in by stating e.g. a user name and a password. The log in procedure can comprise different or additional input data.

The user then fills in a transaction form, i.e. a form in which e.g. recipient, the transferred amount and banking details are specified.

The user then sends this data as a data transmission form request 101 to the server system 30, running a portal for the transaction form. Upon receipt by the server 30 the data is acknowledged e.g. by sending a link as an acknowledge signal 102 to the browser running on the client-device 20.

The user then clicks on the provided link that automatically triggers a predetermined enable-signal 103 to the security-device 10. In an embodiment the triggering is effected by a Browser Plugin. In case that the link is shown in the Browser a dedicated protocol can be used (e.g. olsc://securedevice/login). This protocol is executed via a separate protocol handler. The Browser Plugin is to be understood only as an example. The same functionality can be achieved by some dedicated software.

The security-device 10 is in the possession of the user of the client-device 20 and it is coupled with the client-device 20. This coupling implies that only a predefined minimal data transmission between the client-device 20 and the security-device 10 is possible. The enable signal 103 is received by in a first connection means 1 of the security-device 10.

The security-device 10 can be programmed in software or built into hardware. It is also possible that the security-device 10 comprises hardware and software means, as e.g. the output and input means 3, 4 and the connection means 1, 2.

The security-device 10 is configured to handle only the enable-signal 103 from the client-device 20. The minimality of the data transmission can be realized in many ways and in combinations. In the extreme the enable-signal 103 can comprise only one bit. It is also possible to limit the buffer storage capacity of the first connection means 1 of the security-device 10. Another possibility is that only a certain bit pattern is allowed to as an input for the first connection means 1.

After a positive processing result of the enable-signal 103 by the security-device 10 a secure data connection is established between the server system 30 and the security-device 10 over a separate channel. The security of the channel can be e.g. assured by using the EAC-Protokoll (Technical Guideline 3110). On the security-device 10 the communication with the server-system 30 is handled by a second connection means 2.

A first authentication request 104 is sent from the second communications means 2 of the security-device 10 to the server system 30.

A second authentication request 105 is sent from the server system 30 to second communications means 2 of the security-device 10 comprising the data provided by the user of the client-device 20. At least some data from the data transmission request 101 is transmitted from the server system 30 in the second authentication request 105. This could e.g. be the amount of money requested to be transferred. The data received by security-device 10 in the second authentication request 105 is displayed on an output means 3 of the security-device 10. In the described embodiment the output means 3 comprise a numerical display that can display the amount of money and /or banking account information involved in the data transmission request 101

Upon the correct display of this information the user can authenticate the data (e.g. the amount is correct, the account information is correct) by providing some authentication data 110 to an input means 4 of the security-device 10. The authentication can involve alphanumeric data (e.g. a PIN code, secret password or passphrase only known to the user etc.) and / or biometric data (e.g. a fingerprint scan, an iris scan etc.) and / or a secret password only known to the user.

The input of the authentication data 110 triggers a third authentication request 106 that is sent from the security-device 10 to the server system 30. This third authentication request 106 is coupled with an electronic certificate 111 which can be verified by the server system 30. The electronic certificate 111 is generated by a processor means 5 of the security-device 10.

After a positive verification of the third authentication request 106 the server-system 30 it further processed, i.e. the data transmission request 101 of the client-device 20 is approved. In case of a negative verification result of the third authentication request 106 the requested data transmission is denied.

By using the second secure channel for transmitting the third authentication request 106 it assured that the data transmission request 101 genuine. If e.g. a Trojan or a virus has compromised the security of the client-device 20 is would have been possible that the data actually sent to the server system 30 is altered. The Trojan could have changed e.g. the banking details so that amount is transferred to a different account.

Since the first connection means of the security-device 10 only allows a very minimal data transmission from the client-device 20 there is no risk of compromising the security, i.e. the Trojan spreading to the security-device 10. The security-device 10 receives predefined information in a very limited form insulating it against attacks.

It should be noted that all or some of the devices mentioned can be realized in software or hardware.
- 1: First connection means (connection between client-device and security-device)
- 2: Second connection means (connection between server system and security-device)
- 3: Output means
- 4: Input means
- 5: Processor means
- 10: Security-device
- 20: Client-device
- 30: Server system
- 101: Data transmission request (client-device from server system)
- 102: Acknowledge signal (server system to client-device)
- 103: Enable signal (from client-device to security-device)
- 104: First authentication request (security-device to server system)
- 105: Second authentication request (server system to security-device)
- 106: Third authentication request (security-device to server system)
- 110: Authentication data (user to security-device)
- 111: Electronic certificate

## Claims

1. Security-device (10) for enabling a secure data transmission between a client-device (20) and a server system (30) over an inherently insecure data connection and / or with an inherently insecure client-device (20), comprising
a receiving means (2) for receiving a second authentication request (105) from the server system (30) regarding a data transmission request (101) from the client-device (20) to the server system (30),
the receiving-means (2) being coupled with an output means (3) for providing information about the data transmission request (101) to a user,
an input means (4) for the inputting of authentication data (110) by the user,
a means for generating a third authentication request (106) for the server system (30) by the user at the security-device (10) in dependence of the authentication data (110),
and a first connection-means (1) configured so that only predefined enable signal (103) is receivable and / or processable by the security-device (10) and that the third authentication request (106) is only transmittable to the server system (30), after the correct receipt of the enable signal (103).

2. Security-device according to claim 1, wherein the authentication data (110) at the security device comprises alphanumeric data, in particular a PIN code, a secret password or passphrase only known to the user and / or biometric data, in particular a fingerprint scan and /or an iris scan.

3. Security-device according to claim 1 or 2, wherein the output means (3) comprises an alphanumeric display and or / a Braille display.

4. Security-device according to at least one of the preceding claims, wherein the input means (4) comprises an alphanumeric keyboard, a fingerprint scanner and / or an iris scanner.

5. Security-device according to at least one of the preceding claims, wherein the first data transmission request (101) is a request of a money transfer or an online purchase.

6. Security-device according to at least one of the preceding claims, wherein the first connection means (1) is connectable with a personal computer, a tablet device and /or a smartphone.

7. Method for a secure data transmission, wherein,
a) a data transmission request (101) sent from a client-device (20) to a server system (30);
b) the server system sends an acknowledge request to the client-device (20) upon receipt of the data transmission request (101);
c) the client-device (20) generating a predefined enable signal (103) to a security-device (10);
d) the security-device (10) sends first authentication request (104) to the server system (30),
e) upon which the server system (30) replies with a second authentication request (105) comprising information regarding the data transmission request (101) which is displayed by an output mean (3);
f) an input means (4) receives authentication data (110) from a user;
g) a third authentication request (106) is sent from the security-device (10) to the server system (30), the content depending on the authentication data (110).
